# EUROPÄISCHE PATENTANMELDUNG

(11) **EP 4 176 776 A1**
(43) Veröffentlichungstag der Anmeldung: **10.05.2023**
(21) Anmeldenummer: 22200800.5
(22) Anmeldetag: 11.10.2022
(51) Int. Cl.: A47J 36/06, A47J 36/00, A47J 36/32

(54) **GARGESCHIRRSYSTEM MIT EINEM GARGESCHIRR UND MIT EINEM DECKEL ZUM ABDECKEN DES GARGESCHIRRS**

(30) Priorität: 08.11.2021 BE 202105868
(71) Anmelder: Miele & Cie. KG, 33332 Gütersloh (DE)
(72) Erfinder: Hölscher, Britta, 30167 Hannover (DE)

(57) **Zusammenfassung**

Die Erfindung betrifft ein Gargeschirrsystem (1, 2) mit einem Gargeschirr (1) und mit einem Deckel (2) zum Abdecken des Gargeschirrs (1). Das Gargeschirrsystem (1, 2) ist dadurch gekennzeichnet, dass das Gargeschirrsystem (1, 2) ausgebildet ist, wenigstens zwei unterschiedliche Stellungen, vorzugsweise eine Vielzahl von Stellungen, des Deckels (2) gegenüber dem Gargeschirr (1) zu erkennen.

## Beschreibung

Die Erfindung betrifft ein Gargeschirrsystem, ein Garsystem, ein Gargeschirr sowie einen Deckel zum Abdecken des Gargeschirrs.

Der Trend beim heimischen Kochen geht immer weiter dazu, die Durchführung der Kochprozesse für den Benutzer einfacher, komfortabler und bzw. oder sicherer hinsichtlich des gewünschten Kochergebnisses zu gestalten. Dies kann dadurch unterstützt werden, dass dem Benutzer vollständige Automatikprogramme bzw. Assistenzfunktionen zur Verfügung gestellt werden, welche dem Benutzer einen Teil der Durchführung oder sogar die vollständige Durchführung des Kochprozesses abnehmen sollen. Auch kann ein Kochprozess z.B. von dem Kochfeld und bzw. oder von einem Mobilgerät unterstützt werden, indem dort der Kochprozess verfolgt, dem Benutzer dargestellt sowie die nächsten Handlungen im Rezeptablauf angezeigt bzw. entsprechende Anweisungen an den Benutzer gegeben werden.

Auch sollen die Kochfelder optisch immer weiter aus der Küche verschwinden. Hierzu gehört es auch, die Bedienelemente der Kochfelder immer unauffälliger zu gestalten oder vollständig verschwinden zu lassen. Dies kann dazu führen, die Bedienelemente sowie die Anzeigeelemente der Kochfelder auf die Kochgeschirre zu verlagern. Daher kann es erforderlich oder zumindest wünschenswert sein, dass Informationen zwischen dem Kochgeschirr und dem Kochfeld ausgetauscht werden können. Dies kann die Übermittlung von Anweisungen sowie von Messgrößen enthalten.

Die EP 1 280 443 B1 beschreibt ein elektronisches Bratpfannensystem mit einer Pfanne zum Bereiten von Speisen bzw. Lebensmitteln, einem Griff, der zur Bewegung bzw. Manipulation der Pfanne mit der Pfanne verbunden ist, einem oder mehreren Temperatursensoren, die mit der Pfanne verbunden sind, um Signale zu erzeugen, die eine Pfannencharakteristik bzw. mehrere Pfannencharakteristika angeben, und einer Anzeigeelektronik, die mit den Sensoren verbunden und in bzw. mit dem Griff vorgesehen ist, um wenigstens eine Angabe bzw. Anzeige der Pfannencharakteristika einem Benutzer der Pfanne zur Verfügung zu stellen. Die Anzeigeelektronik weist einen Prozessor auf, um die Signale zu verarbeiten, um Speisencharakteristika, welche Speisen entsprechen, die in der Pfanne bereitet werden, zu assoziieren, und die Anzeigeelektronik umfasst eine Benutzerschnittstelle zum Auswählen einer von mehreren Speisencharakteristika.

Die DE 20 203 566 U1 beschreibt ein Kochgefäß mit einem Griff mit einer Sensorelektronik, mit der wenigstens ein Temperatursensor verbunden ist. Der Temperatursensor ist am Griff vorgesehen. Der Griff ist zusammen mit dem Temperatursensor von dem Kochgefäß abnehmbar ausgebildet. Der Temperatursensor reicht im befestigten Zustand des Griffes an das Wandungsmaterial des Kochgefäßes in temperaturübertragender Weise. Der Griff bzw. die Sensorik weisen ein Display, vorzugsweise ein LC-Display, auf, das insbesondere zur Darstellung verschiedener Zustände oder Bedienvorgänge des Kochgefäßes ausgebildet ist. Der Griff bzw. die Sensorik weisen eine Steuerung, vorzugsweise mit einem Mikroprozessor, auf, wobei insbesondere in dem Mikroprozessor Kochprogramme enthalten sind. An dem Griff sind Schaltmittel oder dergleichen zur Betätigung der Temperaturanzeige oder einer Sensorik vorgesehen. In dem Griff ist eine Energieversorgungvorzugsweise mit einer entnehmbaren Batterie oder einem Akkumulator, vorgesehen.

Die EP 2 361 538 A1 beschreibt eine elektronische Pfanne mit einem Pfannenkörper, einem Griff und einer Stromerzeugung basierend auf der Differenz in der Temperatureinheit und eine Temperaturmesseinheit. Die Stromerzeugung basierend auf der Differenz der Temperatureinheit besteht aus einer Halbleiterkühlscheibe, einem spannungserhöhenden und geregelten Elektronikmodul und einer Energiespeichereinheit. Die Temperaturmesseinheit besteht aus einem Temperatursensor, einem Mikroprozessor, einer Leiterplatte und einer Flüssigkristallanzeige zur Temperaturanzeige. Der Temperatursensor ist direkt unter dem Schalenkörper angeordnet. Die Leiterplatte ist in der Kammer des Griffs angeordnet. Die mit dem Pfannenkörper verbundene Halbleiterkühlscheibe ist innerhalb der Kammer am Anschluss des Griffs und des Pfannenkörpers vorgesehen Die andere Oberfläche der Halbleiterkühlscheibe ist mit metallischen Wärmetauscherscheiben fest kontaktiert. Die Stromerzeugung aufgrund der Differenz in der Temperatureinheit, der Temperaturmesseinheit und der Flüssigkristallanzeige ist jeweils mit der Leiterplatte verbunden.

Nachteilig ist bei all diesen elektronischen Gargeschirren, dass eine sehr aufwendige Elektronik im Griff des Gargeschirres angeordnet werden muss, um die Funktionen umsetzen zu können. Dies kann zu entsprechenden Kosten durch die Entwicklung, Herstellung und Montage der Elektronik führen. Auch kann es erforderlich sein, die Elektronik aufgrund ihres Platzbedarfs im Griff anzuordnen, was die Anwendung derartiger Elektroniken bei Gargeschirren ohne Griff verhindern und auf Pfannen beschränken kann.

In jedem Fall muss die Elektronik auch z.B. vor Feuchtigkeit geschützt werden, was entsprechende Abdichtmaßnahmen erforderlich machen kann, um das Gargeschirr insbesondere spühlmaschinentauglich zu machen. Alternativ kann der Griff vom Benutzer abzunehmen sein, was jedoch einen zusätzlichen Aufwand für den Benutzer bedeuten kann. Die DE 10 2011 102 394 A1 beschreibt eine Vorrichtung zur Bedienung eines Kochfeldes mit wenigstens einer Kochstelle. Die Vorrichtung enthält eine Kochgeschirr-Erfassungseinrichtung, die ausgestaltet ist, um eine Veränderung einer Ausrichtung und bzw. oder Position eines Kochgeschirrs auf einer Kochstelle des Kochfeldes zu erfassen, und eine Steuereinrichtung, die ausgestaltet ist, um wenigstens einen Parameter der jeweiligen Kochstelle in Abhängigkeit von der erfassten Ausrichtungs- und bzw. oder Positionsänderung eines Kochgeschirrs auf dieser Kochstelle einzustellen. Der Benutzer des Kochfeldes kann mit Hilfe dieser Vorrichtung das Kochfeld intuitiv und allein mit dem Kochgeschirr steuern.

Der Erfindung stellt sich somit das Problem, die Möglichkeiten zur Durchführung eines Garprozesses zu verbessern bzw. zu erweitern. Insbesondere sollen die Möglichkeiten zur Bedienung eines Kochfelds bzw. einer Kochstelle eines Kochfelds verbessert bzw. erweitert werden. Insbesondere soll auf Bedien- und bzw. oder Anzeigeelemente des Kochfelds verzichtet werden können bzw. sollen diese zumindest reduziert und bzw. oder vereinfacht werden. In jedem Fall soll dies insbesondere möglichst einfach, kostengünstig, bauraumsparend, universell nutzbar, komfortabel, direkt zugänglich und bzw. oder intuitiv nutzbar bzw. bedienbar erfolgen. Zumindest soll eine Alternative zu den bekannten Möglichkeiten zur Durchführung eines Garprozesses geschaffen werden.

Erfindungsgemäß wird dieses Problem durch ein Gargeschirrsystem, ein Garsystem, ein Gargeschirr sowie einen Deckel zum Abdecken des Gargeschirrs mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung ein Gargeschirrsystem mit einem Gargeschirr und mit einem Deckel zum Abdecken des Gargeschirrs. Das Gargeschirr des erfindungsgemäßen Gargeschirrsystems kann somit ein jegliches Gargeschirr sein, welches beim bestimmungsgemäßen Gebrauch mit einem Deckel verwendet werden kann oder verwendet werden muss, um einen Garprozess durchzuführen. Ein derartiges Gargeschirr kann somit insbesondere ein Topf, eine Pfanne, ein Wok oder dergleichen sein. Unter einem Deckel des Gargeschirrs ist jegliche Art von Abdeckung bzw. Bedeckung des Innenraums eines derartigen Gargeschirrs bzw. dessen Öffnung zu verstehen. Ein derartiger Deckel kann insbesondere teilweise bis vollständig aus Metall und bzw. oder aus Glas ausgebildet sein und in jedem Fall einen Griff als Deckelgriff bzw. als Handgriff aufweisen, um einer Person als Benutzer die Handhabung des Deckels zu erleichtern.

Das Gargeschirrsystem ist dadurch gekennzeichnet, dass das Gargeschirrsystem ausgebildet ist, wenigstens zwei unterschiedliche Stellungen, vorzugsweise eine Vielzahl von Stellungen, des Deckels gegenüber dem Gargeschirr zu erkennen. Mit anderen Worten ist das Gargeschirrsystem in der Lage, wenigstens zwischen zwei unterschiedlichen Stellungen oder sogar zwischen einer Vielzahl von Stellungen, d. h. zwischen mehr als zwei unterschiedlichen Stellungen, des Deckels gegenüber dem Gargeschirr zu unterscheiden.

Unter einer Stellung des Deckels gegenüber dem Gargeschirr werden unterschiedliche Anordnungen des Deckels gegenüber dem Gargeschirr verstanden. Zu diesen unterschiedlichen Stellungen bzw. Anordnungen des Deckels gegenüber dem Gargeschirr gehört, dass eine erste Stellung bzw. Anordnung des Deckels gegenüber dem Gargeschirr darunter verstanden werden kann, dass der Deckel bestimmungsgemäß auf dem Gargeschirr angeordnet ist und somit dessen Innenraum bzw. Öffnung vollständig abdeckt bzw. verschließt. Unter einer zweiten Stellung bzw. Anordnung des Deckels gegenüber dem Gargeschirr kann verstanden werden, dass der Deckel vollständig von dem Gargeschirr abgenommen ist, wodurch der Innenraum bzw. die Öffnung des Gargeschirrs vollständig offen bzw. unverschlossen ist. Unter einer derartigen Stellung bzw. Anordnung kann jedoch auch verstanden werden, dass der Deckel derart auf dem Gargeschirr aufliegt, dass dessen Innenraum bzw. Öffnung lediglich teilweise abgedeckt bzw. verschlossen wird. Ebenso können unterschiedlich abdeckende bzw. verschließende Anordnungen des Deckels auf dem Gargeschirr unterschiedliche Stellungen darstellen.

Unterschiedlich abdeckende bzw. verschließende Anordnungen des Deckels auf dem Gargeschirr werden zusammenfassend auch als aufliegende Positionen, aufliegende Anordnungen oder aufliegende Stellungen des Deckels oder kurz als aufliegender Deckel bezeichnet.

Ebenso kann zu diesen unterschiedlichen Stellungen bzw. Anordnungen des Deckels gegenüber dem Gargeschirr gehören, dass in einer ersten Stellung bzw. Anordnung des Deckels gegenüber dem Gargeschirr der Deckel in der Umfangsrichtung in einem ersten Winkel und in einer zweiten Stellung bzw. Anordnung des Deckels gegenüber dem Gargeschirr der Deckel in der Umfangsrichtung in einem zweiten Winkel gegenüber dem Gargeschirr ausgerichtet ist, wobei der Deckel jeweils abdeckend bzw. verschließend auf dem Gargeschirr bzw. dessen Öffnung aufliegt. Entsprechend können verschiedene Winkel verschiedene Stellungen darstellen. Auch sind Kombinationen hiervon möglich, d. h. auch in einer teilweise abdeckenden bzw. verschließenden Anordnung des Deckels auf dem Gargeschirr bzw. dessen Öffnung kann zusätzlich zwischen verschiedenen Winkelstellungen unterschieden werden, oder umgekehrt. Entsprechend viele verschiedene Stellungen des Deckels auf dem Gargeschirr sind denkbar.

In jedem Fall können die einzelnen Stellungen mittels geeigneter Sensorik, wie weiter unten noch näher beschrieben werden wird, seitens des Gargeschirrsystems erkannt bzw. voneinander unterschieden werden, sodass das Gargeschirrsystem entsprechend viele verschiedene sensorisch erfassbare Zustände aufweisen kann, welche den verschiedenen Stellungen des Deckels gegenüber dem Gargeschirr bzw. dessen Öffnung entsprechen.

Somit kann eine Person als Benutzer des erfindungsgemäßen Gargeschirrsystems das Gargeschirrsystem in verschiedene Zustände bringen, welche vom Gargeschirrsystem erkannt und unterschieden werden können. Dies kann dem Benutzer eine Möglichkeit zur Kommunikation mit dem Gargeschirrsystem und darüber hinaus mit einem Kochfeld, mit einem mobilen Endgerät und dergleichen geben, um Bedieneingaben zur Veränderung eines Garprozesses des Gargeschirrsystems selbst und auch darüber hinaus tätigen zu können, wie weiter unten näher beschrieben werden wird. Dies kann für den Benutzer vergleichsweise einfach, schnell sowie intuitiv erfolgen. Insbesondere kann auf weitere Bedienelemente des Gargeschirrsystems sowie auf weitere Bedienelemente außerhalb des Gargeschirrsystems verzichtet werden.

Zusätzlich oder alternativ kann seitens des Gargeschirrsystems, des Kochfelds, des mobilen Endgeräts und dergleichen selbsttätig auf die unterschiedlichen Stellungen des Deckels auf dem Gargeschirr und somit auf unterschiedliche Zustände des Gargeschirrsystems reagiert werden, wie weiter unten noch näher beschrieben werden wird. Beispielsweise kann ein gar nicht bzw. nicht vollständig auf dem Gargeschirr bzw. dessen Öffnung aufliegender Deckel selbsttätig erkannt und beispielsweise der Benutzer seitens des Gargeschirrsystems, des Kochfelds, des mobilen Endgeräts und dergleichen hierauf hingewiesen werden, um Öffnung mittels des Deckels vollständig zu schließen und somit die Energieeffizienz des Garprozesses zu erhöhen.

Gemäß einem Aspekt der Erfindung ist das Gargeschirrsystem ausgebildet, wenigstens einen auf dem Gargeschirr aufliegenden und einen von dem Gargeschirr abgenommenen Deckel zu erkennen. Dies kann, wie bereits zuvor beschrieben, eine Möglichkeit darstellen, zwischen zwei Stellungen bzw. Anordnungen des Deckels auf dem Gargeschirr bzw. dessen Öffnung und damit zwischen zwei Zuständen des Gargeschirrsystems zu unterscheiden.

Gemäß einem weiteren Aspekt der Erfindung ist das Gargeschirrsystem ausgebildet, wenigstens zwei unterschiedliche Winkelstellungen, vorzugsweise eine Vielzahl von Winkelstellungen, des Deckels gegenüber dem Gargeschirr zu erkennen. Dies kann, wie bereits zuvor beschrieben, eine zusätzliche oder alternative Möglichkeit darstellen, zwischen zwei Stellungen bzw. Anordnungen des Deckels auf dem Gargeschirr bzw. dessen Öffnung und damit zwischen zwei Zuständen des Gargeschirrsystems zu unterscheiden.

Gemäß einem weiteren Aspekt der Erfindung ist das Gargeschirrsystem ausgebildet, der erkannten Stellung des Deckels eine Information, vorzugweise eines Leistungsstufe einer Kochstelle eines Kochfelds und bzw. oder eine Funktion, vorzugsweise des Kochfelds und bzw. oder eines mobilen Endgeräts, zuzuordnen. Entsprechend kann die erkannte Stellung bzw. Anordnung des Deckels auf dem Gargeschirr seitens des Gargeschirrsystems weiterverarbeitet werden, indem der jeweiligen Stellung unterschiedliche Informationen zugeordnet werden können. Derartige Informationen können beispielsweise seitens des Gargeschirrsystems dem Benutzer angezeigt werden, wie weiter unten näher beschrieben werden wird. Zusätzlich oder alternativ können derartige Informationen, insbesondere drahtlos, nach außerhalb des Gargeschirrsystems ausgesendet und somit zur Verfügung gestellt werden, um beispielsweise seitens eines Kochfelds, auf welchem sich das Gargeschirrsystem befindet, und bzw. oder eines mobilen Endgeräts, welches den Benutzer bei der Durchführung des Garprozesses unterstützt, empfangen und verwendet zu werden.

Hierbei die verarbeitete Information anstelle der sensorischen Information darzustellen bzw. auszusenden kann dies vereinfachen, da die entsprechende Signalfilterung und bzw. oder Signalverarbeitung der Sensorinformation seitens des Gargeschirrsystems selbst direkt erfolgen kann. Die verarbeitete Information kann dabei insbesondere eine Leistungsstufe der Kochstelle des Kochfelds sein, auf welcher das Gargeschirrsystem verwendet wird, was dem Benutzer eine besonders einfache und intuitive Bedienung der Kochstelle ermöglichen kann. Die verarbeitete Information kann aber auch der Bedienung bzw. Aktivierung der Kochstelle des Kochfelds und bzw. oder eines mobilen Endgeräts dienen.

Gemäß einem weiteren Aspekt der Erfindung ist bzw. sind das Gargeschirr und bzw. oder der Deckel ausgebildet, drahtlos eine Information auszusenden, welche die erkannte Stellung des Deckels und bzw. oder eine der erkannten Stellung des Deckels zugeordnete Information repräsentiert. Dies kann eine für den Benutzer besonders komfortable Möglichkeit darstellen, die zuvor beschriebenen entsprechenden Funktionen umzusetzen, da auf eine drahtgebundene Datenübertragung bzw. Informationsübertragung verzichtet werden kann.

Gemäß einem weiteren Aspekt der Erfindung ist das Gargeschirrsystem ausgebildet, die erkannte Stellung des Deckels und bzw. oder eine der erkannten Stellung des Deckels zugeordnete Information einem Benutzer mittels des Gargeschirrs, mittels des Deckels, mittels eines Kochfelds und bzw. oder mittels eines mobilen Endgeräts mitzuteilen, vorzugsweise anzuzeigen. Hierdurch können verschiedene alternative oder sich ergänzende Möglichkeiten geschaffen werden, dem Benutzer derartige Informationen mitzuteilen, was jeweils akustisch, haptisch und bzw. oder optisch erfolgen kann.

Gemäß einem weiteren Aspekt der Erfindung weist das Gargeschirr dem Deckel zugewandt wenigstens zwei, vorzugsweise eine Vielzahl von, in Umfangsrichtung versetzt angeordnete Anzeigeelemente, vorzugsweise LEDs, vorzugsweise mehrfarbig und bzw. oder einfarbig maskiert, auf und der Deckel weist wenigstens ein Sichtfenster, vorzugsweise eine Aussparung oder ein transparentes Elemente, auf, durch welche hindurch die Anzeigeelemente des Gargeschirres einzeln von einem Benutzer optisch erfasst werden können, so dass die erkannte Stellung des Deckels und bzw. oder eine der erkannten Stellung des Deckels zugeordnete Information dem Benutzer mittels der Anzeigeelemente des Gargeschirrs durch das Sichtfenster des Deckels hindurch dem Benutzer angezeigt werden kann.

Mit anderen Worten kann gemäß des vorliegenden Aspekts der Erfindung eine optische Anzeigemöglichkeit derartiger Informationen für den Benutzer geschaffen werden, indem wenigstens zwei in Umfangsrichtung versetzt angeordnete Anzeigeelemente, beispielsweise im Rand des Gargeschirrs, und in Richtung des Deckels, vorzugsweise senkrecht nach oben, zeigend angeordnet sind. Gleichzeitig weist der Deckel ein Sichtfenster derartig auf, dass lediglich ein einziges der Anzeigeelemente gleichzeitig für den Benutzer sichtbar sein kann. Verändert der Benutzer dabei die Stellung bzw. Anordnung des Deckels gegenüber dem Gargeschirr, so ist für den Benutzer jeweils genau das Anzeigeelement sichtbar, welches der Stellung bzw. Anordnung des Deckels gegenüber dem Gargeschirr entspricht. Dies kann eine besonders einfache und insbesondere intuitive Bedienung für den Benutzer darstellen.

Als Anzeigeelemente können dabei unterschiedlich farbige Anzeigeelemente verwendet werden, sodass durch die unterschiedlichen Farben die verschiedenen Stellungen unterschieden werden können. Alternativ oder zusätzlich können die Anzeigeelemente auch einfarbig ausgebildet sein und durch Zahlen, Symbole, Buchstaben und dergleichen maskiert, d. h. teilweise überdeckt, werden, sodass bei Aktivierung des Anzeigeelements beispielsweise eine Zahl hinterleuchtet und so dem Benutzer optisch gut sichtbar gemacht wird, welche beispielsweise der Leistungsstufe der Kochstelle des Kochfelds entspricht, welche der Benutzer durch die entsprechende Stellung bzw. Anordnung des Deckels auf dem Gargeschirr bzw. dessen Öffnung gerade eingestellt und somit ausgewählt hat. Dabei LEDs als Anzeigeelemente zu verwenden kann die Nutzung der entsprechenden vorteilhaften Eigenschaften wie beispielsweise geringer Energieverbrauch, geringe Wärmeentwicklung, geringer Bauraum und bzw. oder hohe Lebensdauer ermöglichen. Das Sichtfenster des Deckels als Aussparung auszubilden kann den Aufwand der Umsetzung geringhalten. Das Sichtfenster des Deckels transparent, beispielsweise aus Glas, auszubilden, kann einen Schutz für das sichtbare Anzeigeelement ermöglichen.

Gemäß einem weiteren Aspekt der Erfindung weist bzw. weisen das Gargeschirr und bzw. oder der Deckel wenigstens ein Anzeigeelement auf, welches bzw. welche ausgebildet ist bzw. sind, die erkannte Stellung des Deckels und bzw. oder eine der erkannten Stellung des Deckels zugeordnete Information einem Benutzer alleinig direkt anzuzeigen, wobei das Anzeigeelement vorzugsweise als Flüssigkristallanzeige, vorzugsweise des Deckels, als Vielzahl von LEDs und bzw. oder als, vorzugsweise dimmbares, LED-Lichtband ausgebildet ist bzw. sind. Hierdurch können entsprechende Möglichkeiten geschaffen werden, dem Benutzer Informationen anzuzeigen. Dabei können, insbesondere mittels einer Flüssigkristallanzeige, entsprechende Informationen in Form von Zahlen, Buchstaben, Symbolen und dergleichen ausgegeben werden. Zusätzlich oder alternativ können entsprechende Informationen durch unterschiedliche Farben, durch unterschiedliche Helligkeiten, durch verschiedene aktivierte und deaktivierte Anzeigeelemente und dergleichen angezeigt werden.

Gemäß einem weiteren Aspekt der Erfindung weist das Gargeschirr dem Deckel zugewandt wenigstens ein Sensorelement auf, welches ausgebildet ist, die Anwesenheit oder Abwesenheit des Deckels auf dem Gargeschirr und bzw. oder eine Winkelstellung des Deckels gegenüber dem Gargeschirr sensorisch zu erfassen. Dies kann eine entsprechende sensorische Erfassung ermöglichen, wie zuvor bereits beschrieben.

Dabei kann das Gargeschirr vorzugsweise dem Deckel zugewandt eine Vielzahl von in Umfangsrichtung versetzt angeordneten Sensorelementen aufweisen, welche jeweils ausgebildet sind, optisch oder kapazitiv die Anwesenheit oder Abwesenheit eines Reflektors des Deckels unmittelbar gegenüberliegend zu erkennen, wobei das Gargeschirrsystem ausgebildet ist, aus der Anzahl der erkannten Reflektoren des Deckels die Anwesenheit oder Abwesenheit des Deckels auf dem Gargeschirr und bzw. oder eine Winkelstellung des Deckels gegenüber dem Gargeschirr zu bestimmen. Mit anderen Worten können seitens des Gargeschirrs und seitens des Deckels einander zugewandt mehrere korrespondierende Sensorelemente und Reflektoren vorgesehen werden, sodass jedes Sensorelement zwischen der Anwesenheit und Abwesenheit eines korrespondierenden Reflektors unterscheiden kann. Dies kann beispielsweise kapazitiv mittels eines entsprechend elektrisch leitfähigen Reflektors oder optisch mittels eines entsprechend optisch reflektierenden Reflektors erfolgen, welche sich jeweils von ihrer Umgebung ausreichend signifikant unterscheiden können, um von den Sensorelementen erkannt zu werden.

Dabei ist die Anzahl der Paare von Sensorelementen und Reflektoren begrenzt, sodass die verschiedenen Stellungen bzw. Anordnungen des Deckels auf dem Gargeschirr dadurch voneinander unterschieden werden können, wie viele Sensorelemente einen korrespondierenden Reflektor in der aktuellen Stellung bzw. Anordnung des Deckels auf dem Gargeschirr bzw. dessen Öffnung erkennen oder eben nicht. Sind mehrere derartige Paare von Sensorelementen und Reflektoren vorhanden und lediglich ein Sensorelement erkennt einen Reflektor, so kann dieser Stellung bzw. Anordnung des Deckels auf dem Gargeschirr bzw. dessen Öffnung der Wert "1" zugeordnet sowie vorzugsweise seitens des Gargeschirrsystems wie zuvor beschrieben dem Benutzer angezeigt und bzw. oder dem Kochfeld als Leistungsstufe übermittelt werden. Dreht der Benutzer den Deckel gegenüber dem Gargeschirr in der Umfangsrichtung soweit weiter, dass zwei Sensorelemente Reflektoren erkennen, so kann dieser Stellung bzw. Anordnung des Deckels auf dem Gargeschirr bzw. dessen Öffnung der Wert "2" zugeordnet sowie gegebenenfalls wie zuvor beschrieben weiterverarbeitet werden. Dies kann eine technisch besonders einfache Möglichkeit darstellen, zwischen verschiedenen Stellungen bzw. Anordnungen des Deckels auf dem Gargeschirr bzw. dessen Öffnung in der Umfangsrichtung Gargeschirrs zu unterscheiden.

Gemäß einem weiteren Aspekt der Erfindung sind das Gargeschirr und der Deckel ausgebildet, so dass der Deckel in der Umfangsrichtung in diskreten Winkelstellungen gegenüber dem Gargeschirr angeordnet werden kann, wobei vorzugsweise der Rand des Gargeschirrs Positionierelemente und der Rand des Deckels korrespondierende Positionierelemente aufweist, welche ausgebildet sind, formschlüssig und bzw. oder kraftschlüssig miteinander zusammenzuwirken, wobei vorzugsweise die Positioniermittel des Randes des Gargeschirrs eine Mehrzahl von in der Umfangsrichtung zueinander versetzt angeordnete Nuten und die Positioniermittel des Rands des Deckels wenigstens ein korrespondierender Vorsprung ist, oder umgekehrt. Mit anderen Worten können mechanische Positionierelemente seitens des Randes des Gargeschirrs sowie seitens des Randes des Deckels, vorzugsweise jeweils in der vertikalen Richtung ausgerichtet, vorhanden sein, sodass der Benutzer den Deckel auf dem Gargeschirr mittels haptischer Unterstützung der korrespondierenden Positionierelemente intuitiv in den vorbestimmten diskreten Winkelstellungen anordnen kann. Dies kann besonders einfach mittels wenigstens einer Raste bzw. eines Vorsprungs und entsprechend vieler Vertiefungen bzw. Nuten umgesetzt werden. Je nach konkreter Ausgestaltung können die korrespondierenden Positionierelemente dabei wenigstens formschlüssig und bzw. oder kraftschlüssig zusammenwirken, um einen sicheren Halt in der jeweiligen diskrete Winkelstellung zu ermöglichen.

Gemäß einem weiteren Aspekt der Erfindung weist das Gargeschirr dem Deckel zugewandt wenigstens einen Elektromagneten auf, welcher ausgebildet ist, den Deckel an das Gargeschirr heranzuziehen und bzw. oder den Deckel vom Gargeschirr abzustoßen. Dies kann den Funktionsumfang des Gargeschirrsystems erweitern, indem eine anziehende Kraft des Elektromagneten auf den Deckel ausgeübt werden kann, um den Deckel sicher auf dem Gargeschirr zu halten. Zusätzlich oder alternativ den Deckel vom Gargeschirr abzustoßen kann eine Möglichkeit der Kommunikation seitens des Gargeschirrsystems mit dem Benutzer darstellen, um dem Benutzer intuitiv verständlich darauf aufmerksam zu machen, den Deckel vom Gargeschirr abzuheben oder dergleichen.

Gemäß einem weiteren Aspekt der Erfindung ist bzw. sind das Gargeschirr und bzw. oder der Deckel doppelwandig ausgebildet, so dass sich ein Zwischenraum zur thermisch isolierten Aufnahme von elektronischen Elementen bildet. Dies kann die entsprechenden elektronischen Elemente vor der Wärme des Garprozesses schützen und somit deren Lebensdauer erhöhen.

Die vorliegende Erfindung betrifft auch ein Garsystem mit einem Kochfeld mit wenigstens einer Kochstelle und mit einem Gargeschirrsystem wie zuvor beschrieben, welches auf der Kochstelle des Kochfelds angeordnet ist, wobei das Kochfeld ausgebildet ist, drahtlos eine Information von dem Gargeschirr, von dem Deckel oder von einem mobilen Endgerät zu erhalten, welche eine erkannte Stellung des Deckels gegenüber dem Gargeschirr und bzw. oder eine der erkannten Stellung zugeordnete Information repräsentiert, und das Kochfeld ist ausgebildet, die Kochstelle, auf welcher das Gargeschirr angeordnet ist, in Abhängigkeit der erhaltenen Information zu betreiben, vorzugsweise dessen Leistungsstufe in Abhängigkeit der erkannten Stellung des Deckels gegenüber dem Gargeschirr einzustellen. Dies kann ein System mit wenigstens einem Kochfeld und mit wenigstens einem erfindungsgemäßen Gargeschirrsystem wie zuvor beschrieben zur Verfügung stellen, um die zuvor beschriebenen Eigenschaften und Vorteile des erfindungsgemäßen Gargeschirrsystems umsetzen und nutzen zu können.

Die vorliegende Erfindung betrifft auch ein Gargeschirr zur Verwendung in einem Gargeschirrsystem wie zuvor beschrieben. Hierdurch kann ein Gargeschirr wie zuvor beschrieben zur Verfügung gestellt werden, um das zuvor beschriebene erfindungsgemäße Gargeschirrsystem mit seinen Eigenschaften und Vorteilen umsetzen und umsetzen zu können.

Die vorliegende Erfindung betrifft auch einen Deckel zum Abdecken des Gargeschirrs wie zuvor beschrieben und zur Verwendung in einem Gargeschirrsystem wie zuvor beschrieben. Hierdurch kann ein Deckel wie zuvor beschrieben zur Verfügung gestellt werden, um das zuvor beschriebene erfindungsgemäße Gargeschirrsystem mit seinen Eigenschaften und Vorteilen umsetzen und umsetzen zu können.

Mit anderen Worten kann das erfindungsgemäße Gargeschirrsystem, welches auch als Funktionsgargeschirr oder als Systemgargeschirr bezeichnet werden kann, verwendet werden, um durch Sensoren im Boden und im Rand des Gargeschirres Parameter des Garprozesses zu ermitteln und so einen temperaturgenauen gesteuerten bzw. geregelten Garprozess zu ermöglichen, um beispielsweise ein Kochen ohne Überkochen mit aufgelegtem Deckel, d.h. mit geschlossenem Gargeschirr, zu ermöglichen.

Hierzu kann vorzugsweise ein doppelwandiges Gargeschirr bzw. Gargefäß, wie beispielsweise ein Topf, eine Pfanne, ein Wok oder dergleichen, verwendet werden, welches mit einem Deckel ausgestattet und verwendet werden kann. Zwischen der Doppelwandigkeit des Gargeschirres können sich an der oberen Kante bzw. am Rand des Gargeschirrs optische und bzw. oder kapazitive Sensoren zur Detektierung, einfarbige oder mehrfarbige LEDs zur Anzeige verschiedener Stati, ein oder mehrere elektrisch gesteuerte Magnete, um den Deckel fest zu verschließen, und z.B. Nuten für eine physische Positionierhilfe des Deckels befinden. Die obere Kante kann mit einer wasserdichten und robusten Abdeckung, z.B. Silikon, verklebt sein, welche die Eigenschaften der Sensoren und LEDs aber nicht beeinträchtigt. Die Sensoren, LEDs und Magnete können sich im Innern der Doppelwandigkeit befinden und für den Nutzer nicht zugänglich sein. Das gesamte Gargeschirr und der Deckel können temperaturbeständig sein und in der Spülmaschine gereinigt werden.

Der Deckel kann einwandig oder doppelwandig sein und somit noch eine weitere isolierende Funktion für das Gargeschirr aufweisen.

Der ganze obere Bereich des Gargeschirr-Randes mit den integrierten Sensoren, LEDs, Magneten und der Positionierhilfe für den Deckel kann durch eine Materialtrennung, z.B. durch eine Silikonfuge, von dem restlichen Gargeschirr thermisch entkoppelt sein. Somit kann gewährleistet werden, dass die empfindlichen elektronischen Bauteile nicht überhitzen und dadurch Schaden nehmen. Alternativ kann auch ein äußeres Gargeschirr von einem inneren Gargeschirr so getrennt sein, dass keine Hitze an die Bauteile übertragen werden kann. Das äußere Gefäß kann z.B. aus einem Kunststoff bestehen, ein- oder mehrlagig, und das innere Gefäß kann aus einem Edelstahlgefäß bestehen.

Erfindungsgemäß kann eine Interaktion durch den Deckel gegenüber dem Gargeschirr ermöglicht werden, indem beispielsweise die Deckelposition und bzw. oder die Deckelwinkelstellung für die Leistungsstufeneinstellung und bzw. oder die Einstellungen des Kochprozesses verwendet werden. Durch die Winkelstellung des Deckels kann die jeweilige Leistungsstufe oder Programmwahl eingestellt werden. Durch den Deckel hindurch kann die jeweilige Einstellung zu erkennen sein. Hierzu kann der gesamte Deckel aus einem transparenten Material, z.B. aus Glas, bestehen oder der Deckel kann ein integriertes Sichtfenster aufweisen, wo hindurch die Anzeige ermöglicht werden kann.

Um eine genaue Positionierung des Deckels gegenüber dem Gargeschirr in der jeweiligen Winkelstellung zu gewährleisten, können Positionierhilfen bzw. Positionierelemente wie beispielsweise Nuten in den Gargeschirr-Rand eingelassen sein, in die eine Ausformung an der Deckelunterseite als Gegenstück Positionierhilfe exakt hineinpassen kann.

Über kapazitive oder optische Sensoren kann dann die Deckeleinstellung ermittelt und beispielsweise die entsprechende Leistungsstufe oder Programmwahl vom Benutzer eingestellt werden. Die Anzeige kann über maskierte LEDs beispielsweise als Ziffern oder Symbole im doppelwandigen Gargeschirr erfolgen, die durch den Deckel hindurch sichtbar sein können. Es könnten Leistungsstufen oder aber auch Sonderfunktionen wie Warmhalten und Booster sowie kochprozessgesteuerte Funktionen wie Erwärmen, Kochen, Anbraten etc. eingestellt werden.

Es kann auch eine Deckelposition geben, die eine Verbindung mit appgesteuerten Prozessen ermöglichen kann, so dass das Gargeschirr dann Signale aus der App wie z.B. beim rezeptgeführten Kochen empfangen und verarbeiten kann - eine sog. "App-Position" des Deckels. Somit kann erfindungsgemäß auch eine Interaktion des Deckels mit appgesteuerten Koch- und Brat-Prozessen ermöglicht werden. Hierzu kann über die Sensoren nicht nur die Winkelstellung des Deckels ermittelt werden, sondern auch, ob der Deckel auf dem Gargeschirr aufliegt oder nicht. Ferner kann über das Kochfeld oder über die App ermittelt werden, wie lange der Deckel nicht mehr aufliegt bzw. das Gargeschirr offen war. Der Nutzer kann somit Hinweise und Informationen über das Kochfeld bzw. über die Kochfeldbedienung oder über die App bekommen, den Deckel zu schließen, z.B. um ein besseres Garergebnis zu erreichen oder bewusst Energie zu sparen.

Über das Wissen, ob der Deckel auf dem Gargeschirr aufliegt oder nicht, oder kurz angehoben worden ist, kann aber auch eine appgeführte Kochprozesse deutlich komfortabler gestaltet werden. Z.B. kann so ermittelt werden, ob Gargut hinzugefügt oder ob das Gargut umgerührt oder umgeschichtet worden ist, da ein Öffnungen und Schließen des Deckels erkannt werden kann. Die appgeführte Kochprozesssteuerung kann somit automatisch, z.B. nach einem kurzen Timeout oder nach einer schnellen Bestätigung durch eine Taste oder eine kurze Spracheingabe oder eine Wischgeste über das Display, komfortable weitergeführt werden.

Ein Beispiel: Der Nutzer möchte mittels einer Rezeptführung per App ein Gericht zubereiten. Laut dem Rezeptschritt muss ein Gargut hinzugegeben werden. Dadurch, dass der Deckel kurz angehoben und wieder aufgesetzt worden ist, weiß die App (mit hoher Wahrscheinlichkeit), dass das entsprechende Gargut hinzugefügt worden ist, und schaltet automatisch oder nach anderen o.g. Interaktionen einen Rezeptschritt weiter. Die appgesteuerte Rezeptführung kann somit deutlich komfortabler und intuitiver ggü. heutigen Apps ausgeführt werden. Der Nutzer könnte auch durch einen Hinweis am Gargeschirr und bzw. oder am Deckel, z.B. durch ein umlaufendes, ein- oder mehrfarbiges Lichtband oder durch ein aufleuchtendes Symbol am Gargeschirrrand oder am Deckel, auf eine notwendige Interaktion hingewiesen werden, z.B. Gargut nachlegen, umrühren, Gargut wenden und dergleichen.

Um die Kochprozesse noch sicherer und effizienter zu gestalten und den Nutzer noch stärker durch den Kochprozess anzuleiten sowie Fehlbedienungen auszuschließen, kann der Deckel mittels einem oder mehreren elektrisch schaltbaren Magnete fest verschlossen oder ggf. auch etwas angehoben werden, z.B. durch Gleichpoligkeit. Die Schaltung der Magnete kann ebenfalls über das Kochfeld oder die App gesteuert und in den gesamten geführten Kochprozess integriert werden, z.B. fest Verschließen, wenn ein sensibler Kochprozess läuft, oder zumindest die Öffnung etwas erschweren, und Öffnen bzw. Anheben, wenn eine Interaktion des Nutzers gefordert ist oder Druck bzw. Dampf aus dem Gargeschirr entweichen muss. Je nachdem, wie stark die Magnete sind, kann auch Druck im Innern des Gargeschirres aufgebaut und für einen optimierten und energieeffizienten Garprozess genutzt werden, vgl. Schnellkochtopf.

Die gesamte Kommunikation des Glasgefäßes kann auch alternativ oder zusätzlich zur App mit dem Kochfeld erfolgen und über die Kochfeldbedienung, beispielsweise über ein großes Touch-Display angesteuert werden.

In jedem Fall kann hierdurch erfindungsgemäß eine komfortable, intuitive und bzw. oder direkt zugängliche Bedienung durch Interaktion mit dem Deckel des Funktionsgargeschirrs ermöglicht werden. Es kann ein erweiterter Funktionsumfang durch räumlich mehr Platz für die Bedienung und zusätzliche Optionen durch das ergänzende Element Deckel ermöglicht werden. Es kann auch eine verständliche und intuitive Bedienung und Unterstützung im Kochprozess durch Verbindung, Kopplung bzw. Vernetzung der Topfdeckelpositionierung (auf oder zu und bzw. oder Winkelstellung in Drehposition) und prozess- und bzw. oder rezeptgeführte Anleitung über ein externes Gerät, z.B. Smartphone oder Tablet, z.B. mittels einer rezeptgeführten Schritt-für-Schritt-Anleitung, ermöglicht werden.

Mehrere Ausführungsbeispiele der Erfindung sind in den Zeichnungen rein schematisch dargestellt und werden nachfolgend näher beschrieben. Es zeigt
- Figur 1: einen Längsschnitt durch ein erfindungsgemäßes Gargeschirr gemäß eines ersten Ausführungsbeispiels eines erfindungsgemäßen Gargeschirrsystems;
- Figur 2: das erfindungsgemäße Gargeschirr der Figur 1 direkt von oben;
- Figur 3: einen Längsschnitt durch ein erfindungsgemäßes Gargeschirr gemäß eines zweiten Ausführungsbeispiels des erfindungsgemäßen Gargeschirrsystems;
- Figur 4: einen Längsschnitt durch ein erfindungsgemäßes Gargeschirr gemäß eines dritten Ausführungsbeispiels des erfindungsgemäßen Gargeschirrsystems;

- Figur 5: einen Längsschnitt durch einen erfindungsgemäßen Deckel gemäß eines ersten Ausführungsbeispiels des erfindungsgemäßen Gargeschirrsystems;
- Figur 6: einen Längsschnitt durch einen erfindungsgemäßen Deckel gemäß eines zweiten Ausführungsbeispiels des erfindungsgemäßen Gargeschirrsystems;
- Figur 7: einen Längsschnitt durch einen erfindungsgemäßen Deckel gemäß eines dritten Ausführungsbeispiels des erfindungsgemäßen Gargeschirrsystems;
- Figur 8: eine Draufsicht auf den erfindungsgemäßen Deckel gemäß des ersten Ausführungsbeispiels aufgesetzt auf die Öffnung des erfindungsgemäßen Gargeschirrs gemäß des ersten Ausführungsbeispiels in einer ersten Stellung;
- Figur 9: die Darstellung der Figur 8 in einer zweiten Stellung;
- Figur 10: die Darstellung der Figur 8 in einer dritten Stellung mit einem mobilen Endgerät;
- Figur 11: eine seitliche Darstellung des erfindungsgemäßen Gargeschirrs gemäß des ersten Ausführungsbeispiels mit angehobenem erfindungsgemäßem Deckel gemäß des ersten Ausführungsbeispiels mit dem mobilen Endgerät;
- Figur 12: eine seitliche Darstellung des erfindungsgemäßen Gargeschirrs gemäß des ersten Ausführungsbeispiels mit angehobenem erfindungsgemäßem Deckel gemäß des dritten Ausführungsbeispiels; und
- Figur 13: die Darstellung der Figur 12 mit aufgesetztem Deckel.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U.

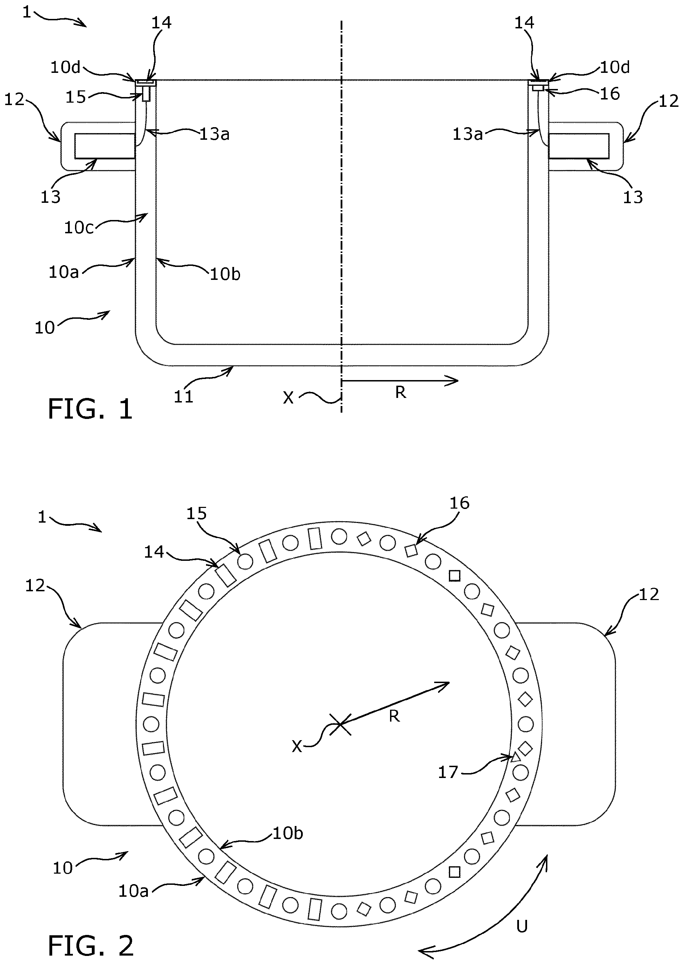

Figur 1 zeigt einen Längsschnitt durch ein erfindungsgemäßes Gargeschirr 1 gemäß eines ersten Ausführungsbeispiels eines erfindungsgemäßen Gargeschirrsystems 1, 2. Figur 2 zeigt das erfindungsgemäße Gargeschirr 1 der Figur 1 direkt von oben. Das Gargeschirr 1 kann auch als Gargefäß 1 bezeichnet werden und wird am Beispiel eines Topfes 1 betrachtet, wobei das Gargeschirr 1 beispielsweise auch eine Pfanne 1 oder ein Wok 1 sein könnte.

Der Topf 1 gemäß des ersten Ausführungsbeispiels besteht im Wesentlichen aus einem Gargeschirrkörper 10, welcher metallisch ausgebildet ist. Der Gargeschirrkörper 10 weist eine Außenwand 10a und eine Innenwand 10b auf, welche zwischen sich einen Zwischenraum 10c im Wesentlichen einschließen, welcher nach oben hin von einem Verschlusselement 10d als Abdeckelemente 10d flüssigkeitsdicht verschlossen wird. Innerhalb der Innenwand 10b befindet sich ein Innenraum (nicht bezeichnet) des Topfes 1 mit einer entlang der Längsachse X nach oben hin offenen Öffnung (nicht bezeichnet). Der Innenraum des Topfes 1 ist ausgebildet, um den Garprozess durchzuführen bzw. das Gargut durch die Öffnung hindurch aufzunehmen. Der untere horizontale bzw. flache Bereich des Gargeschirrkörpers 10 bildet dabei den Gargeschirrboden 11, mit welchem der Topf 1 auf einer Kochstelle eines Kochfelds (nicht dargestellt) aufgesetzt werden kann, um einen Garprozess durchzuführen. Der Topf 1 weist radial vom Gargeschirrkörper 10 nach außen abstehend und einander zur Längsachse X diametral gegenüberliegend zwei Gargeschirrgriffe 12 auf, welche seitlich an die Außenwand 10a des Gargeschirrkörpers 10 angebracht sind. Die beiden Gargeschirrgriffe 12 können einer Person als Benutzer die Handhabung des Topfes 1 vereinfachen.

Innerhalb der beiden Gargeschirrgriffe 12 ist jeweils eine Steuerungseinheit 13 in Form einer Elektronik 13 vorgesehen, welche jeweils mittels eines Verbindungselements 13a in Form eines Kabels 13a mit weiteren elektronischen Bauelementen energie- und signalübertragend verbunden ist. Die Steuerungseinheiten 13 umfassen jeweils auch einen wiederaufladbaren elektrischen Energiespeicher (nicht dargestellt), welcher der elektrischen Versorgung der Steuerungseinheit 13 sowie der weiteren elektronischen Bauelemente dient. Die Steuerungseinheiten 13 beider Gargeschirrgriffe 12 können auch zusammen als Steuerungseinheit 13 des Topfes 1 angesehen werden und entsprechend zusammenwirken, beispielsweise indem die Steuerungseinheit 13 des einen Gargeschirrgriffs 12 die Datenverarbeitung und Steuerung weiterer elektronische Bauelemente sowie eine drahtlose Datenübertragung wenigstens durch Aussenden von Informationen und vorzugsweise zusätzlich durch Empfangen von Informationen ausführen kann und die Steuerungseinheit 13 des anderen Gargeschirrgriffs 12 den wiederaufladbaren elektrischen Energiespeicher aufweist, wobei beide Steuerungseinheiten 13 entsprechend energie- und signalübertragend verbunden sind.

Zu diesen elektronischen Bauelementen gehören mehrere Anzeigeelement 15 in Form von maskierten LEDs 15, welche über den gesamten Umfang des Abdeckelements 10d des Gargeschirrkörpers 10 in der Umfangsrichtung U gleichmäßig zueinander versetzt angeordnet und entlang der Längsachse X nach oben hin ausgerichtet sind. Die LEDs 15 weisen jeweils eine Zahl oder ein Symbol auf, welches bei Betrieb der jeweiligen LED 15 von unten bzw. von hinten weiß hinterleuchtet und somit sichtbar gemacht werden kann.

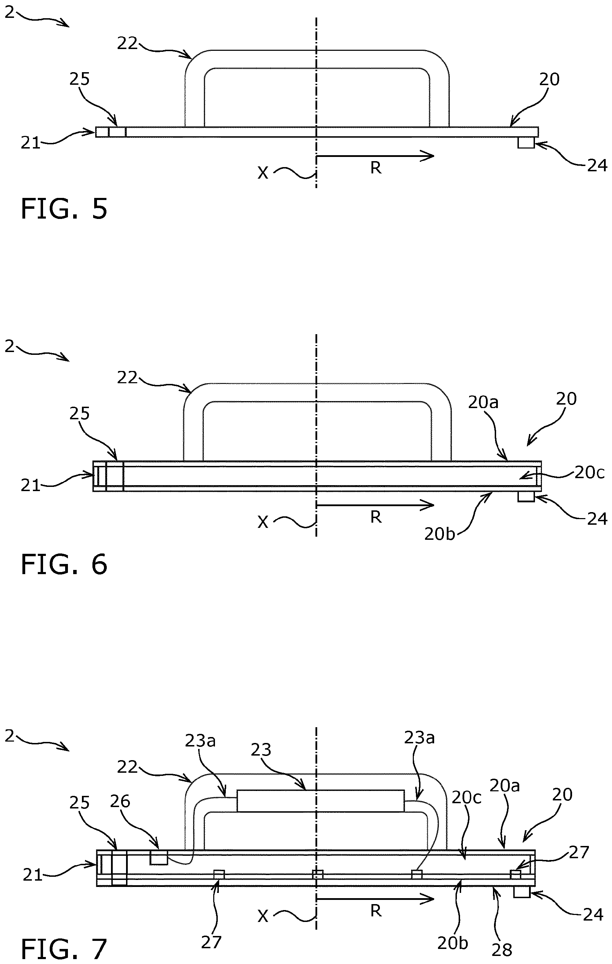

Zu diesen elektronischen Bauelementen gehören auch mehrere Sensorelemente 16, welche entweder als kapazitive oder als optische Sensoren 16 ausgebildet sind. Auch die Sensorelemente 16 sind entlang der Längsachse X nach oben hin ausgerichtet, jedoch in der Umfangsrichtung U lediglich über den halben Umfang des Abdeckelements 10d des Gargeschirrkörpers 10 gleichmäßig zueinander versetzt angeordnet. In diesem Bereich des Abdeckelements 10d des Gargeschirrkörpers 10 wechseln sich LEDs 15 und Sensorelemente 16 in der Umfangsrichtung U ab. Ein erfindungsgemäßer Deckel 2, wie er anhand der Figuren 5 bis 7 weiter unten näher beschrieben werden wird, weist an seinem Rand entsprechende Reflektoren (nicht dargestellt) auf, welche mit den Sensorelementen 16 des Topfes 1 zusammenwirken können. Im Falle von kapazitiven Sensoren 16 sind diese Reflektoren des Deckels 2 elektrisch leitfähig ausgebildet und unterscheiden sich von dem umgebenden Material des Deckels 2 ausreichend, sodass die Reflektoren des Deckels 2 von kapazitiven Sensoren 16 des Topfes 1 erkannt werden können, wenn die Reflektoren des Deckels 2 entlang der Längsachse X unmittelbar auf den kapazitiven Sensoren 16 des Topfes 1 angeordnet sind. Dies gilt entsprechend für optische Sensoren 16, dessen korrespondierende Reflektoren des Deckels 2 optisch signifikant reflektierender als die übrige Oberfläche des Randes des Deckels 2 ausgebildet sein können.

Zu diesen elektronischen Bauelementen gehört ferner ein Elektromagnet 17, welcher ebenfalls entlang der Längsachse X nach oben hin ausgerichtet ist. Wird der Elektromagnet 17 in der einen Stromrichtung bestromt, so kann hierdurch der metallische Deckel 2 an den Elektromagneten 17 und damit an das Abdeckelement 10d des Gargeschirrkörpers 10 herangezogen und somit gehalten bzw. stärker verschlossen werden als ohne den Betrieb des Elektromagneten 17. Wird der Elektromagnet 17 in der anderen Stromrichtung bestromt, so kann hierdurch der metallische Deckel 2 von dem Elektromagneten 17 abgestoßen und damit zumindest abschnittsweise geringfügig angehoben werden.

Über den halben Umfang des Abdeckelements 10d des Gargeschirrkörpers 10, welcher keine Sensorelemente 16 aufweist, sind stattdessen zwischen den LEDs 15 in der Umfangsrichtung U gleichmäßig zueinander beabstandet und entlang der Längsachse X nach oben hin ausgerichtet mehrere Positionierelemente 14 in Form von Nuten in dem Abdeckelement 10d des Gargeschirrkörpers 10 vorgesehen. Der Deckel 2 weist ein korrespondierend angeordnetes Positionierelement 24 in Form eines Vorsprungs 24 auf, welche entlang der Längsachse nach unten hin ausgerichtet ist. Wird der Deckel 2 somit von oben auf den Topf 1 aufgesetzt, so greift der Vorsprung 24 des Deckels 2 lediglich in diskreten Winkelstellungen des Deckels 2 gegenüber dem Topf 1 in eine der Nuten 14 des Topfes 1 ein, wodurch die entsprechenden Winkelstellungen haptisch vorgegeben werden können.

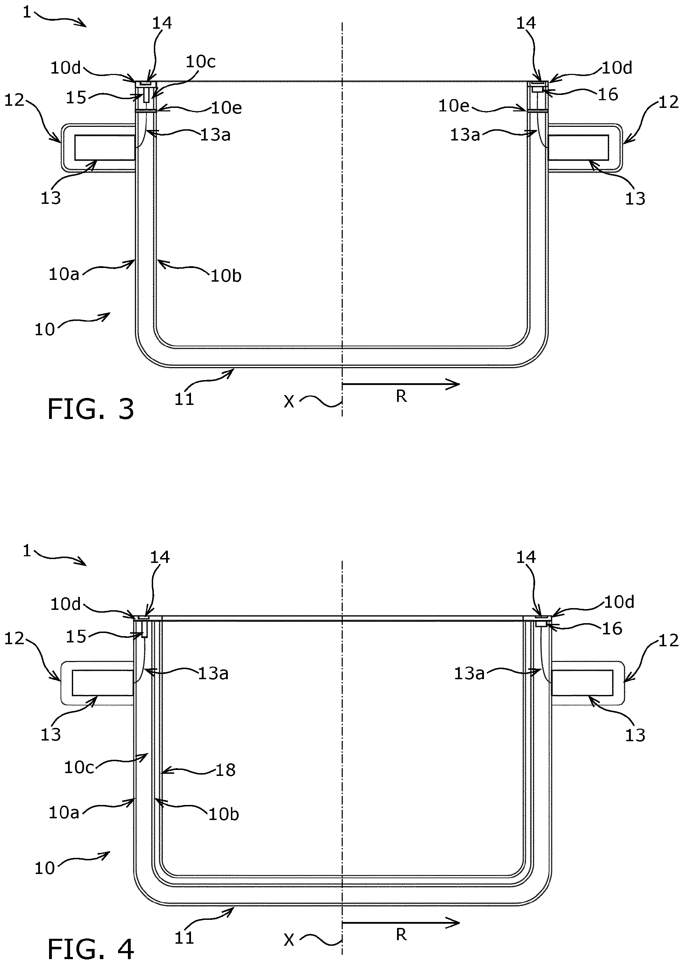

Figur 3 zeigt einen Längsschnitt durch ein erfindungsgemäßes Gargeschirr 1 gemäß eines zweiten Ausführungsbeispiels des erfindungsgemäßen Gargeschirrsystems 1, 2. In diesem Fall ist in der Umfangsrichtung U umlaufend eine thermische Entkopplung 10e innerhalb des Zwischenraums 10c vorgesehen, welche die elektronischen Bauelemente nach unten hin thermisch abgrenzt bzw. isoliert.

Figur 4 zeigt einen Längsschnitt durch ein erfindungsgemäßes Gargeschirr 1 gemäß eines dritten Ausführungsbeispiels des erfindungsgemäßen Gargeschirrsystems 1, 2. In diesem Fall bildet der doppelwandige Gargeschirrkörper 10 einen äußeren Gargeschirrkörper 10, welcher beispielsweise aus Kunststoff ausgebildet sein kann. Ferner ist ein innerer Gargeschirrkörper 18, beispielsweise aus Edelstahl, in dem äußeren Gargeschirrkörper 10 angeordnet, um den Garprozess durchzuführen bzw. das Gargut aufzunehmen.

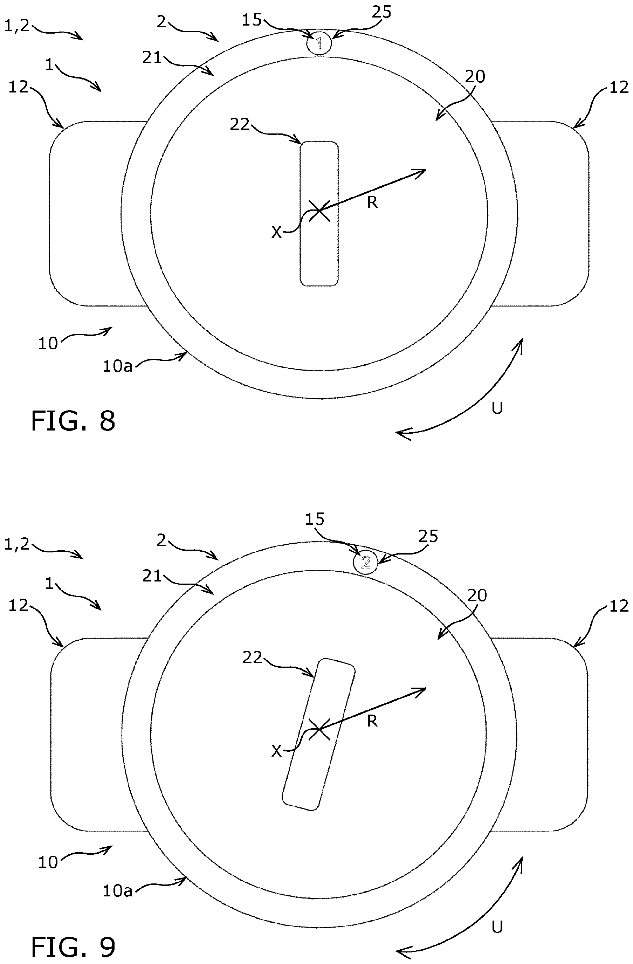

Figur 5 zeigt einen Längsschnitt durch einen erfindungsgemäßen Deckel 2 gemäß eines ersten Ausführungsbeispiels des erfindungsgemäßen Gargeschirrsystems 1, 2. Der Deckel 2 weist einen Deckelkörper 20 auf, welche gemäß des ersten Ausführungsbeispiels des Deckels 2 einwandig ausgebildet ist. Der Deckel 2 weist einen Deckelgriff 22 auf, welcher auf der Oberseite des Deckels 2 bzw. des Deckelkörpers 20 angeordnet ist. Der Deckel 2 bzw. dessen Deckelkörper 20 ist kreisrund ausgebildet, vgl. zum Beispiel Figur 8, und weist somit radial außen einen kreisrunden Deckelrand 21 auf. Am Deckelrand 21 ist genau ein Sichtfenster 25 angeordnet, welches durch eine Aussparung 25 oder durch ein transparentes Element 25 wie beispielsweise Glas 25 gebildet werden kann. Dem Sichtfenster 25 diametral zur Längsachse X gegenüberliegend ist entlang der Längsachse X nach unten zeigend der bereits angesprochene Vorsprung 24 angeordnet.

Figur 6 zeigt einen Längsschnitt durch einen erfindungsgemäßen Deckel 2 gemäß eines zweiten Ausführungsbeispiels des erfindungsgemäßen Gargeschirrsystems 1, 2. In diesem Fall ist der Deckelkörper 20 doppelwandig ausgebildet und weist entsprechend entlang der Längsachse X zueinander versetzt nach oben zeigend eine Außenwand 20a und nach unten zeigend eine Innenwand 20b auf, welche randseitig zylindrisch miteinander verbunden sind (nicht bezeichnet), sodass sich ein Zwischenraum 20c bildet. Das Sichtfenster 25 ragt entsprechend durch den Deckelkörper 20 entlang der Längsachse X hindurch.

Figur 7 zeigt einen Längsschnitt durch einen erfindungsgemäßen Deckel 2 gemäß eines dritten Ausführungsbeispiels des erfindungsgemäßen Gargeschirrsystems 1, 2. In diesem Fall sind zusätzlich zu dem zweiten Ausführungsbeispiel des Deckels 2 elektronische Bauelemente vorgesehen. So ist eine Steuerungseinheit 23 in Form einer Elektronik 23 innerhalb des Deckelgriffs 22 angeordnet und über ein Verbindungselement 23a in Form eines Kabels mit weiteren elektronischen Bauelementen verbunden. Auch in diesem Fall umfasst die Steuerungseinheit 23 einen wiederaufladbaren elektrischen Energiespeicher zur elektrischen Versorgung der Steuerungseinheit 23 sowie der weiteren elektronischen Bauelemente auf. Auch die Steuerungseinheit 23 des Deckels 2 kann zumindest drahtlos Informationen aussenden und vorzugsweise auch empfangen.

Zu diesen weiteren elektronischen Bauelementen gehört ein Anzeigeelement 26 in Form einer Flüssigkristallanzeige 26, welche radial zwischen dem Sichtfenster 25 und dem Deckelgriff 22 angeordnet ist, um Informationen in Form von Buchstaben, Zahlen, Symbolen und dergleichen anzuzeigen. Auch sind mehrere LEDs 27 am radialen Rand des doppelwandigen Deckelkörpers 20 angeordnet, sodass die LEDs 27 radial nach außen im gleichen Farbton oder in unterschiedlichen Farbtönen leuchten können, um einem Benutzer Informationen anzuzeigen. Ferner ist im Bereich des radialen Rands der Innenwand 20b des Deckelkörpers 20 in der Umfangsrichtung U umlaufend geschlossen ein LED-Lichtband 28 angeordnet, welches einfarbig in unterschiedlichen Helligkeiten leuchten kann, d. h. dimmbar ausgebildet ist, um auch hierdurch dem Benutzer Informationen anzuzeigen.

Figur 8 zeigt eine Draufsicht auf den erfindungsgemäßen Deckel 2 gemäß des ersten Ausführungsbeispiels aufgesetzt auf die Öffnung des erfindungsgemäßen Gargeschirrs 1 gemäß des ersten Ausführungsbeispiels in einer ersten Stellung. Figur 9 zeigt die Darstellung der Figur 8 in einer zweiten Stellung.

Der erfindungsgemäße Topf 1, beispielsweise gemäß dessen ersten Ausführungsbeispiels, kann somit von einem Benutzer auf ein Kochfelds einer Kochstelle aufgestellt werden. Der Benutzer kann dann die Zutaten eines Garprozesses in den Innenraum des Topfes 1 geben und dessen Öffnung mit dem erfindungsgemäßen Deckel 2, beispielsweise gemäß dessen ersten Ausführungsbeispiels, vollständig verschließen. Dabei kann der Benutzer den Deckel 2 derart auf den Topf 1 aufsetzen, dass der Vorsprung 24 des Deckels 2 in eine der Nuten 14 des Topfes 1 einrastet und somit der Deckel 2 gegenüber dem Topf 1 eine diskrete Winkelstellung in der Umfangsrichtung U einnimmt.

Nun können jeweils der Topf 1 und der Deckel 2 vom Benutzer durch Betätigen eines entsprechenden Bedienelements wie beispielsweise eines Kippschalters (nicht dargestellt) hinsichtlich ihrer Funktionen eingeschaltet bzw. aktiviert werden. Dies kann beispielsweise auch durch das Aktivieren der elektrischen Speisung der Kochstelle als induktive Kochstelle erfolgen, welche induktiv elektrische Energie auf den Topf 1 übertragen und diesen hierdurch aktivieren kann. Eine entsprechende induktive Energieübertragung und damit Aktivierung kann dann auch seitens des Topfes 1 hinsichtlich des Deckels 2 erfolgen.

In jedem Fall kann die Steuerungseinheit 13 des Topfes 1 nun die Sensorelemente 16 dahingehend abfragen, welche Sensorelemente 16 den korrespondierenden Reflektor des Deckels 2 erkennen oder nicht. Aufgrund der eindeutig definierten Anordnung der Reflektoren des Deckels 2 gegenüber den Sensorelementen 16 des Topfes 1 für die diskreten Winkelstellungen, wie sie durch den Vorsprung 24 des Deckels 2 und die Nuten 14 des Topfes 1 vorgegeben werden, kann auf die Winkelstellung des Deckels 2 gegenüber dem Topf 1 geschlossen werden. Gleichzeitig sind die maskierten LEDs 15 des Topfes 1 so angeordnet und mit beispielsweise Zahlen versehen, sodass nun die entsprechende LED 15 des Topfes 1 aktiviert werden kann, welche durch das Sichtfenster 25 des Deckels 2 für den Benutzer sichtbar ist. Gleichzeitig kann die erkannte Winkelstellung von der Steuerungseinheit 13 des Topfes 1 an das Kochfeld übertragen werden, sodass das Kochfeld die Kochstelle, welche das erfindungsgemäße Gargeschirrsystem 1, 2 aufnimmt, mit der entsprechenden Leistungsstufe betreiben kann. Dabei kann die maskierte Zahl der LED 15 des Topfes 1, welche durch das Sichtfenster 25 des Deckels 2 für den Benutzer in dieser Winkelstellung sichtbar ist, der eingestellten Leistungsstufe entsprechen, sodass die eingestellte Leistungsstufe dem Benutzer vom Gargeschirrsystem 1, 2 angezeigt werden kann, siehe Figur 8.

Möchte der Benutzer nun die Leistungsstufe der Kochstelle des Kochfelds erhöhen, so kann der Benutzer den Deckel 2 ausreichend anheben, um den Vorsprung 24 des Deckels 2 aus der Nut 14 des Topfes 1 zu lösen, und dann den Deckel 2 gegenüber dem Topf 1 in der Umfangsrichtung U soweit drehen, bis beispielsweise der Vorsprung 24 des Deckels 2 in die in der Umfangsrichtung U unmittelbar nächste Nut 14 des Topfes 1 eingreift, was der nächsten Leistungsstufe entspricht, siehe Figur 9. Dies kann die Benutzer somit eine besonders einfache und intuitive Bedienung des erfindungsgemäßen Gargeschirrsystems 1, 2 ermöglichen, welche direkt am Gargeschirrsystem 1, 2 vorgenommen werden kann. Durch die Verwendung des Deckels 2 als Bedienelement kann dabei auf zusätzliche Bedienelemente verzichtet werden.

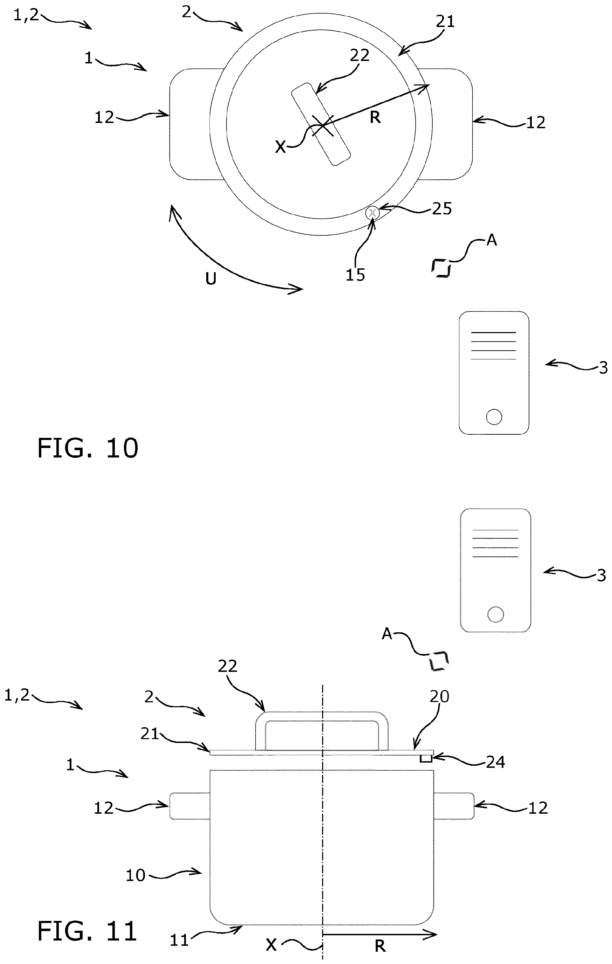

Figur 10 zeigt die Darstellung der Figur 8 in einer dritten Stellung mit einem mobilen Endgerät 3. Als mobiles Endgerät kann beispielsweise ein Smartphone 3 verwendet werden. Entsprechend kann eine Winkelstellung des Deckels 2 gegenüber dem Topf 1 vorgesehen sein, welche keiner Leistungsstufe der Kochstelle des Kochfelds entspricht sondern der Aktivierung bzw. Steuerung einer Funktion des Smartphones 3 dient. Wählt der Benutzer diese Winkelstellung des Deckels 2, so kann eine entsprechende Information vom Topf 1 mittels einer drahtlosen Datenübertragung A an das Smartphone 3 ausgesendet werden, um beispielsweise einen durch den Benutzer ausgeführten Schritt eines Garprozesses am Gargeschirrsystem 1, 2 gegenüber dem Smartphone 3 zu bestätigen, welches dem Benutzer rezeptgeführt bei dem Garprozess unterstützt.

Figur 11 zeigt eine seitliche Darstellung des erfindungsgemäßen Gargeschirrs 1 gemäß des ersten Ausführungsbeispiels mit angehobenem erfindungsgemäßem Deckel 2 gemäß des ersten Ausführungsbeispiels mit dem mobilen Endgerät 3. Im Rahmen eines derartigen rezeptgeführten Garprozesses kann auch ein Hinweis seitens des Smartphones 3 an dem Benutzer dadurch erfolgen, dass der Elektromagnet 17 des Topfes 1 gemäß Hinweis des Smartphones 3 vom Topf 1 aktiviert wird, um den Deckel 2 anzuheben bzw. abzustoßen. Hierdurch kann der Benutzer vom Smartphones 3 darauf hingewiesen werden, einen Schritt des Garprozesses am Gargeschirrsystem 1, 2 durchzuführen.

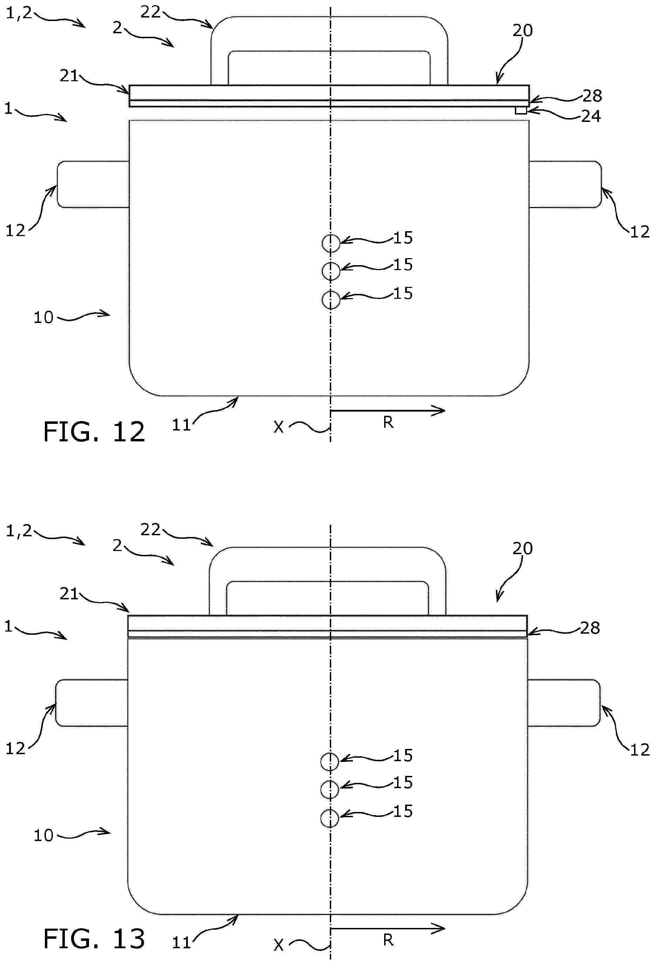

Figur 12 zeigt eine seitliche Darstellung des erfindungsgemäßen Gargeschirrs 1 gemäß des ersten Ausführungsbeispiels mit angehobenem erfindungsgemäßem Deckel 2 gemäß des dritten Ausführungsbeispiels. Figur 13 zeigt die Darstellung der Figur 12 mit aufgesetztem Deckel 2. Die Figuren 12 und 13 zeigen weitere Möglichkeiten des erfindungsgemäßen Gargeschirrsystems 1, 2, um weitere Anzeigeelemente 15 in Form von unterschiedlich farbigen LEDs 15 des Topfes 1 zur Anzeige von Informationen für den Benutzer zu nutzen. Zusätzlich oder alternativ kann dies durch das zuvor bereits erwähnte LED-Lichtband 28 des Deckels 28 erfolgen.

### Bezugszeichenliste (Bestandteil der Beschreibung)

- A: drahtlose Datenübertragung

- R: radiale Richtung
- U: Umfangsrichtung
- X: Längsachse

- 1, 2: Gargeschirrsystem

- 1: Gargeschirr; Gargefäß; Topf; Pfanne; Wok
- 10: (äußerer) Gargeschirrkörper
- 10a: Außenwand des Gargeschirrkörpers 10
- 10b: Innenwand des Gargeschirrkörpers 10
- 10c: Zwischenraum des Gargeschirrkörpers 10
- 10d: Verschlusselement bzw. Abdeckelement des Gargeschirrkörpers 10
- 10e: thermische Entkopplung
- 11: Gargeschirrboden
- 12: Gargeschirrgriffe
- 13: Steuerungseinheit; Elektronik
- 13a: Verbindungselement; Kabel
- 14: Positionierelemente; Nuten
- 15: Anzeigeelemente; (maskierte) LEDs
- 16: Sensorelemente; kapazitive und/oder optische Sensoren
- 17: Elektromagnet
- 18: innerer Gargeschirrkörper

- 2: Deckel
- 20: Deckelkörper
- 20a: Außenwand des Deckelkörpers 20
- 20b: Innenwand des Deckelkörpers 20
- 20c: Zwischenraum des Deckelkörpers 20
- 21: Deckelrand
- 22: Deckelgriff
- 23: Steuerungseinheit; Elektronik
- 23a: Verbindungselement; Kabel
- 24: Positionierelemente; Vorsprung
- 25: Sichtfenster; Aussparung; transparentes Element; Glas
- 26: Anzeigeelement; Flüssigkristallanzeige
- 27: LEDs
- 28: LED-Lichtband

- 3: mobiles Endgerät; Smartphone

## Patentansprüche

1. Gargeschirrsystem (1, 2)
mit einem Gargeschirr (1) und
mit einem Deckel (2) zum Abdecken des Gargeschirrs (1),
**dadurch gekennzeichnet, dass**
das Gargeschirrsystem (1, 2) ausgebildet ist, wenigstens zwei unterschiedliche Stellungen, vorzugsweise eine Vielzahl von Stellungen, des aufliegenden Deckels (2) gegenüber dem Gargeschirr (1) zu erkennen.

2. Gargeschirrsystem (1, 2) nach Anspruch 1,
wobei das Gargeschirrsystem (1, 2) ausgebildet ist, wenigstens einen auf dem Gargeschirr (1) aufliegenden und einen von dem Gargeschirr (1) abgenommenen Deckel (2) zu erkennen.

3. Gargeschirrsystem (1, 2) nach Anspruch 1 oder 2,
wobei das Gargeschirrsystem (1, 2) ausgebildet ist, wenigstens zwei unterschiedliche Winkelstellungen, vorzugsweise eine Vielzahl von Winkelstellungen, des Deckels (2) gegenüber dem Gargeschirr (1) zu erkennen.

4. Gargeschirrsystem (1, 2) nach Anspruch 3,
wobei das Gargeschirrsystem (1, 2) ausgebildet ist, der erkannten Stellung des Deckels (2) eine Information, vorzugweise eines Leistungsstufe einer Kochstelle eines Kochfelds und/oder eine Funktion, vorzugsweise des Kochfelds und/oder eines mobilen Endgeräts (3), zuzuordnen.

5. Gargeschirrsystem (1, 2) nach einem der vorangehenden Ansprüche,
wobei das Gargeschirr (1) und/oder der Deckel (2) ausgebildet ist/sind, drahtlos eine Information auszusenden, welche die erkannte Stellung des Deckels (2) und/oder eine der erkannten Stellung des Deckels (2) zugeordnete Information repräsentiert.

6. Gargeschirrsystem (1, 2) nach einem der vorangehenden Ansprüche,
wobei das Gargeschirrsystem (1, 2) ausgebildet ist, die erkannte Stellung des Deckels (2) und/oder eine der erkannten Stellung des Deckels (2) zugeordnete Information einem Benutzer mittels des Gargeschirrs (1), mittels des Deckels (2), mittels eines Kochfelds und/oder mittels eines mobilen Endgeräts (3) mitzuteilen, vorzugsweise anzuzeigen.

7. Gargeschirrsystem (1, 2) nach einem der vorangehenden Ansprüche,
wobei das Gargeschirr (1) dem Deckel (2) zugewandt wenigstens zwei, vorzugsweise eine Vielzahl von, in Umfangsrichtung (U) versetzt angeordnete Anzeigeelemente (15), vorzugsweise LEDs (15), vorzugsweise mehrfarbig und/oder einfarbig maskiert, aufweist und
wobei der Deckel (2) wenigstens ein Sichtfenster (25), vorzugsweise eine Aussparung (25) oder ein transparentes Elemente (25), aufweist, durch welche hindurch die Anzeigeelemente (15) des Gargeschirres (1) einzeln von einem Benutzer optisch erfasst werden können, so dass die erkannte Stellung des Deckels (2) und/oder eine der erkannten Stellung des Deckels (2) zugeordnete Information dem Benutzer mittels der Anzeigeelemente (15) des Gargeschirrs (1) durch das Sichtfenster (25) des Deckels (2) hindurch dem Benutzer angezeigt werden kann.

8. Gargeschirrsystem (1, 2) nach einem der vorangehenden Ansprüche,
wobei das Gargeschirr (1) und/oder der Deckel (2) wenigstens ein Anzeigeelement (15, 26, 27, 28) aufweist/aufweisen, welches/welche ausgebildet ist/sind, die erkannte Stellung des Deckels (2) und/oder eine der erkannten Stellung des Deckels (2) zugeordnete Information einem Benutzer alleinig direkt anzuzeigen,
wobei das Anzeigeelement (15, 26, 27, 28) vorzugsweise als Flüssigkristallanzeige (26), vorzugsweise des Deckels (2), als Vielzahl von LEDs (15, 27) und/oder als, vorzugsweise dimmbares, LED-Lichtband (28) ausgebildet ist/sind.

9. Gargeschirrsystem (1, 2) nach einem der vorangehenden Ansprüche,
wobei das Gargeschirr (1) dem Deckel (2) zugewandt wenigstens ein Sensorelement (16) aufweist, welches ausgebildet ist, die Anwesenheit oder Abwesenheit des Deckels (2) auf dem Gargeschirr (1) und/oder eine Winkelstellung des Deckels (2) gegenüber dem Gargeschirr (1) sensorisch zu erfassen,
wobei vorzugsweise das Gargeschirr (1) dem Deckel (2) zugewandt eine Vielzahl von in Umfangsrichtung (U) versetzt angeordneten Sensorelementen (16) aufweist, welche jeweils ausgebildet sind, optisch oder kapazitiv die Anwesenheit oder Abwesenheit eines Reflektors des Deckels (2) unmittelbar gegenüberliegend zu erkennen,
wobei das Gargeschirrsystem (1, 2) ausgebildet ist, aus der Anzahl der erkannten Reflektoren des Deckels (2) die Anwesenheit oder Abwesenheit des Deckels (2) auf dem Gargeschirr (1) und/oder eine Winkelstellung des Deckels (2) gegenüber dem Gargeschirr (1) zu bestimmen.

10. Gargeschirrsystem (1, 2) nach einem der vorangehenden Ansprüche,
wobei das Gargeschirr (1) und der Deckel (2) ausgebildet sind, so dass der Deckel (2) in der Umfangsrichtung (U) in diskreten Winkelstellungen gegenüber dem Gargeschirr (1) angeordnet werden kann,
wobei vorzugsweise der Rand des Gargeschirrs (1) Positionierelemente (14) und der Rand des Deckels (2) korrespondierende Positionierelemente (14) aufweist, welche ausgebildet sind, formschlüssig und/oder kraftschlüssig miteinander zusammenzuwirken,
wobei vorzugsweise die Positioniermittel (14) des Randes des Gargeschirrs (1) eine Mehrzahl von in der Umfangsrichtung (U) zueinander versetzt angeordnete Nuten (14) und die Positioniermittel (24) des Rands des Deckels (2) wenigstens ein korrespondierender Vorsprung (24) ist, oder umgekehrt.

11. Gargeschirrsystem (1, 2) nach einem der vorangehenden Ansprüche,
wobei das Gargeschirr (1) dem Deckel (2) zugewandt wenigstens einen Elektromagneten (17) aufweist, welcher ausgebildet ist, den Deckel (2) an das Gargeschirr (1) heranzuziehen und/oder den Deckel (2) vom Gargeschirr (1) abzustoßen.

12. Gargeschirrsystem (1, 2) nach einem der vorangehenden Ansprüche,
wobei das Gargeschirr (1) und/oder der Deckel (2) doppelwandig ausgebildet ist/sind, so dass sich ein Zwischenraum (10c, 20c) zur thermisch isolierten Aufnahme von elektronischen Elementen (15, 16, 17, 26, 27) bildet.

13. Garsystem mit
einem Kochfeld mit wenigstens einer Kochstelle und
mit einem Gargeschirrsystem (1, 2) nach einem der vorangehenden Ansprüche, welches auf der Kochstelle des Kochfelds angeordnet ist,
wobei das Kochfeld ausgebildet ist, drahtlos eine Information von dem Gargeschirr (1), von dem Deckel (2) oder von einem mobilen Endgerät (3) zu erhalten, welche eine erkannte Stellung des Deckels (2) gegenüber dem Gargeschirr (1) und/oder eine der erkannten Stellung zugeordnete Information repräsentiert, und
wobei das Kochfeld ausgebildet ist, die Kochstelle, auf welcher das Gargeschirr (1) angeordnet ist, in Abhängigkeit der erhaltenen Information zu betreiben, vorzugsweise dessen Leistungsstufe in Abhängigkeit der erkannten Stellung des Deckels (2) gegenüber dem Gargeschirr (1) einzustellen.

14. Gargeschirr (1) zur Verwendung in einem Gargeschirrsystem (1, 2) nach einem der Ansprüche 1 bis 12.

15. Deckel (2) zum Abdecken des Gargeschirrs (1) nach Anspruch 14 und zur Verwendung in einem Gargeschirrsystem (1, 2) nach einem der Ansprüche 1 bis 12.
